# EUROPÄISCHE PATENTANMELDUNG

(11) **EP 0 574 924 A1**
(43) Veröffentlichungstag der Anmeldung: **22.12.1993**
(21) Anmeldenummer: 93109714.1
(22) Anmeldetag: 17.06.1993
(51) Int. Cl.: A62D 3/00, C02F 1/78, C02F 1/32, C02F 11/00, B09B 3/00

(54) **Verfahren zur chemischen Sanierung kontaminierter Böden oder Schlämme**

(30) Priorität: 17.06.1992 DE 9208136 U
(71) Anmelder: S.U.T. HÖLSCHER INGENIEUR- UND TECHNOLOGIEPROJEKTE GmbH, D-21335 Lüneburg (DE)
(72) Erfinder: Liesenfeld, Karen, Dipl.-Ing., W-2800 Bremen (DE); Winkelmann, Manuela, Dipl.-Ing., W-2131 Bardowick (DE)
(74) Vertreter: Patentanwälte Wenzel & Kalkoff

(57) **Zusammenfassung**

Die Erfindung betriff ein Verfahren zur chemischen Sanierung kontaminierter Böden oder Schlämme aus Unfällen, Schlammfängen oder Altlasten, anzuwenden als eigenständiges Verfahren oder als Teilschritt einer Verfahrenskombination, wobei die Kontamination durch chemische Oxidation mit Hilfe von Wasserstoffperoxid und/oder Ozon und/oder anderen Oxidationsmitteln, gfls. im Dünnschichtverfahren mit Unterstützung durch UV-Strahlung teilweise oder vollständig beseitigt oder für sich anschließende Verfahrensschritte zur Fortsetzung der Reinigung aufgeschlossen wird.

## Beschreibung

Die Erfindung betrifft ein Verfahren zur chemischen Sanierung kontaminierter Böden oder Schlämme aus Unfällen, Schlammfängen oder Altlasten, anzuwenden als eigenständiges Verfahren oder als Teilschritt einer Verfahrenskombination.

Es ist bekannt, Wasserstoffperoxid als Sauerstoffträger in mikrobiologischen Prozessen bei aeroben biologischen Sanierungsvorhaben (biologische Oxidation) einzusetzen. Verfahren dieser Art haben besondere Bedeutung bei biologischen Sanierungen in größeren Bodentiefen, in denen eine ausreichende Sauerstoffversorgung sonst nicht oder nur unzureichend herbeigeführt werden kann.

Es ist auch bekannt, Wasserstoffperoxid und andere Oxidationsmittel zur Unterstützung der biologischen Oxidation in der Abwassertechnik einzusetzen.

Demgegenüber hat die Erfindung ein Verfahren zum Gegenstand, mit dem eine vollständige oder teilweise chemische Oxidation von Kontaminationen in Böden/Schlämmen mit Hilfe von Wasserstoffperoxid und/oder Ozon und/oder anderen Oxidationsmitteln herbeigeführt wird. Die Oxidation wird gfls. durch Anwendung von UV-Strahlung unterstützt. Auf diese Weise werden Radikale gebildet, die sehr effektive Oxidationsmittel sind und höhere Kohlenwasserstoffe sowie andere komplizierte Verbindungen soweit aufschließen, daß sie biologischen Verfahren und Bodenwaschverfahren zugänglich gemacht werden können.

Nach Beendigung des Verfahrens im Boden noch vorhandene Wasserstoffperoxidreste sowie verbleibende Radikale disproportionieren nach einiger Zeit zu Wasser und Sauerstoff, so daß sich keine erneute Umweltbelastung im Boden, im Wasser oder in der Luft ergeben kann.

Das erfindungsgemäße Verfahren ist insbesondere durch die Maßnahmen und Merkmale der Ansprüche 1 - 7 gekennzeichnet.

Das erfindungsgemäße Verfahren hat besondere Bedeutung bei der Behandlung von Böden/Schlämmen, die durch andere Reinigungsverfahren nicht behandelt werden können. Hierbei kann es sich beispielsweise um mit Teerölen aus Kokereien verunreinigten Boden handeln, der mit dem erfindungsgemäßen Verfahren soweit vorbehandelt werden kann, daß anschließend ein herkömmliches Reinigungsverfahren wie beispielsweise ein biologisches Oxidationsverfahren wirksam werden kann.

Das erfindungsgemäße Verfahren hat besondere Bedeutung dadurch, daß die Bestimmungen über zulässige Grenzen für den Schadstoffgehalt von Böden/Schlämmen in den letzten Jahren zunehmend verschärft wurden. Diese Grenzwerte sind inzwischen bei stark kontaminierten Böden für eine unbedenkliche Ausbringung des Bodens mit umweltfreundlichen Mitteln durch die bisher angewendeten Bodensanierungsverfahren nicht mehr zu erreichen.

Die chemische Oxidation des kontaminierten Bodens durch Zugabe von Wasserstoffperoxid, Ozon oder andere Radikale bildende Oxidationsmittel, wobei sich die Dosierung nach der Art und dem Ausmaß der Kontamination richtet, kann als umweltfreundliches Sanierungsverfahren oder aber, wie bereits vorstehend angedeutet, zur Vorbereitung und Unterstützung anderer Sanierungsverfahren eingesetzt werden.

Die Einbringung der Oxidationsmittel kann insbesondere durch Sprühen, Einmischen oder Injizieren von flüssigem Wasserstoffperoxid erfolgen. Wesentlich ist dabei ein geschlossenes System im Sinne eines geschlossenen Raums oder eine für den Umgebungsschutz beim Sprühen oder Einmischen ausreichende Abdeckung oder Einhausung. Dabei können oberirdische Bauwerke ebenso wie in den Boden eingelassene Aufnahmegruben Verwendung finden, wobei auch ein kontinuierlicher oder diskontinuierlicher Durchlauf des Bodens erfolgen kann. Für den Reinheitsgrad des eingesetzten Wasserstoffperoxids reicht Industriequalität aus. Die Behandlung des Bodens kann eine Zeitdauer von mehreren Wochen in Anspruch nehmen. Wenn Probenentnahmen während der Behandlung zeigen, daß die inzwischen erreichte Oxidation noch unzureichend ist, wird zweckmäßig eine weitere Wasserstoffperoxidmenge eingemischt.

Polyaromatische Kohlenwasserstoffe können beispielsweise durch große Mengen Wasserstoffperoxid zu CO₂ oxidiert oder aber nur anoxidiert werden zu Säuren, Alkoholen oder Aldehyden, um sie Mikroorganismen zum biologischen Schadstoffabbau verfügbar zu machen. Die Reaktion kann durch Katalysatoren in Form von Chemikalien wie beispielsweise Eisen-II-Salze, Wärme, UV- oder Lichtstrahlen unterstützt werden.

Auf diese Weise können komplizierte Verbindungen, die sich gfls. auch durch eine Bodenwäsche nicht vom Boden trennen lassen oder sehr hohe Schadstoffbelastungen im Boden so weit gereinigt werden, daß die Böden im Wirtschaftskreislauf wieder verwertet werden können.

Die Einwirkdauer ist sowohl abhängig von der Art und Höhe der Kontamination als auch von der Menge und Konzentration der eingebrachten Oxidationsmittel. Die Einwirkdauer gilt als abgeschlossen, wenn weniger als 0,2% (Massenprozent) Oxidationsmittel nachgewiesen werden und keine Radikale mehr im Boden vorhanden sind.

Durch den Sanierungsvorgang werden andere Umweltbereiche (Luft, Boden, Wasser), die vorher noch unbelastet waren, nicht zusätzlich in Mitleidenschaft gezogen.

## Patentansprüche

1. Verfahren zur chemischen Sanierung kontaminierter Böden oder Schlämme aus Unfällen, Schlammfängen oder Altlasten, anzuwenden als eigenständiges Verfahren oder als Teilschritt einer Verfahrenskombination, dadurch **gekennzeichnet,** daß die Kontamination durch chemische Oxidation mit Hilfe von Wasserstoffperoxid und/oder Ozon und/oder anderen Oxidationsmitteln, gfls. im Dünnschichtverfahren mit Unterstützung durch UV-Strahlung teilweise oder vollständig beseitigt oder für sich anschließende Verfahrensschritte zur Fortsetzung der Reinigung aufgeschlossen wird.

2. Verfahren nach Anspruch 1, dadurch **gekennzeichnet,** daß die Kontamination im Boden je nach Art und Menge der Schadstoffe ohne Einschränkung bezüglich der Art des Bodens ganz oder teilweise beseitigt wird.

3. Verfahren nach Anspruch 1 oder 2, dadurch **gekennzeichnet,** daß Kontaminationen jeder Art behandelt werden, nämlich sowohl organische als auch anorganische Substanzen bzw. Substanzgemische, die teilweise oder vollständig oxidierbar sind.

4. Verfahren nach einem oder mehreren der Ansprüche 1 - 3, dadurch **gekennzeichnet,** daß die Oxidation der Bodenkontaminationen als alleiniges Verfahren oder in Kombination mit anderen Bodenbehandlungen, insbesondere mit mikrobiologischen Verfahren und/oder Waschverfahren als Teilschritt einer Verfahrenskombination eingesetzt wird.

5. Verfahren nach einem oder mehreren der Ansprüche 1 - 4, dadurch **gekennzeichnet,** daß das Oxidationsmittel innerhalb eines Waschprozesses dem ausgehobenen und/oder in anderer Weise in Behandlung befindlichen und/oder in Mieten aufgeschichteten Boden einmalig oder mehrmals zugegeben wird.

6. Verfahren nach einen oder mehreren der Ansprüche 1 - 5, dadurch **gekennzeichnet,** daß Wasserstoffperoxid als Oxidationsmittel dem Boden in einer Menge von mindestens 1% Massenprozent zugegeben wird, um die Schadstoffe chemisch zu oxidieren, wobei Wasserstoffperoxid nicht als Sauerstoffquelle für biologische Vorgänge benutzt wird.

7. Verfahren nach einem oder mehreren der Ansprüche 1 - 6, dadurch **gekennzeichnet,** daß im Oxidationsmittel zur Beschleunigung der Reaktion Katalysatoren in Form von Chemikalien, Wärme-, UV- oder Lichtstrahlen zugeführt werden.
